# EUROPÄISCHE PATENTSCHRIFT

(11) **EP 0 901 418 B1**
(45) Veröffentlichungstag und Bekanntmachung des Hinweises auf die Patenterteilung: **15.12.1999**
(21) Anmeldenummer: 97920742.0
(22) Anmeldetag: 23.04.1997
(51) Int. Cl.: B60G 17/015

(54) **FAHRZEUG MIT NIVEAUGEREGELTEM FEDERUNGSSYSTEM**
VEHICLE WITH CONTROLLED-LEVEL SUSPENSION
VEHICULE A SUSPENSION A REGULATION DE NIVEAU

(30) Priorität: 05.06.1996 DE 19622677
(43) Veröffentlichungstag der Anmeldung: 17.03.1999
(73) Patentinhaber: DaimlerChrysler AG, 70567 Stuttgart (DE)
(72) Erfinder: CHARZINSKI, Uwe, D-70378 Stuttgart (DE); HORWATH, Jochen, D-72669 Unterensingen (DE); MÜLLER, Hartwig, D-70190 Stuttgart (DE); RICKLEFS, Gerald, D-71394 Kernen (DE); SCHEURER, Friedrich, D-73760 Ostfildern (DE)
(86) Internationale Anmeldenummer: EP9702060
(87) Internationale Veröffentlichungsnummer: WO9746403

(56) Entgegenhaltungen:
- DE-A- 3 815 859
- US-A- 5 083 275
- PATENT ABSTRACTS OF JAPAN vol. 018, no. 682 (M-1729), 22.Dezember 1994 & JP 06 270628 A (NISSAN DIESEL MOTOR CO LTD), 27.September 1994,
- PATENT ABSTRACTS OF JAPAN vol. 011, no. 131 (M-584), 24.April 1987 & JP 61 271108 A (NISSAN MOTOR CO LTD), 1.Dezember 1986,
- PATENT ABSTRACTS OF JAPAN vol. 009, no. 176 (M-398), 20.Juli 1985 & JP 60 047711 A (MAZDA KK), 15.März 1985,

## Beschreibung

Die Erfindung betrifft ein Fahrzeug mit niveaugeregeltem Federungssystem, insbesondere ein Fahrzeug mit niveaugeregelter Luftfederung, wobei die Niveauregulierung unabhängig von einer Betätigung einer Betriebsbremse des Fahrzeuges zu arbeiten vermag und eine dem Federungssystem zur Niveauregulierung zugeordnete, eingangsseitig mit Sensoren zur Niveauerfassung verbundene Regelschaltung mit Signalgebern verbunden ist, welche eine Betätigung einer Hauptbetriebsbremse des Fahrzeuges erfassen.

Ein derartiges Fahrzeug ist Gegenstand der DE 38 15 859 C2.

Luftfederungen für Kraftfahrzeuge sind grundsätzlich bekannt und werden serienmäßig eingesetzt. In der Regel ist druckseitig eines Kompressors ein pneumatischer Druckspeicher vorgesehen, der vom Kompressor ständig auf einem Ladedruck gehalten wird, welcher deutlich oberhalb der Betriebsdrücke der jeweiligen Luftfederaggregate bzw. -bälge liegt.

Es wurde auch schon versucht, den Druckspeicher bei Luftfederungen zu erübrigen und die Luftfederaggregate bzw. -bälge bei Bedarf direkt vom Kompressor aus mit Druckluft zu speisen. Dies ist insbesondere dann möglich, wenn die Luftfüllung der Luftfederaggregate im wesentlichen nur bei einer Absenkung bzw. Anhebung des Niveaus des Fahrzeuges, nicht aber bei normalen Federhüben verändert wird.

Bei Fahrzeugen mit derartigen Luftfederungssystemen ist regelmäßig vorgesehen, die Be- bzw. Entlüftung der Luftfederaggregate bzw. -bälge niveauabhängig vorzunehmen.

Im übrigen ist eine Niveauregulierung auch bei anderen Federungssystemen grundsätzlich bekannt. Beispielsweise können parallel zu passiven Federungselementen, wie z.B. Schraubenfedern, zusätzliche steuerbare Abstützorgane angeordnet sein, die beispielsweise hydropneumatisch arbeiten.

Falls eine Niveauregulierung anspricht, wenn das Fahrzeug mit betätigter Betriebsbremse, welche auf sämtliche Fahrzeugräder wirkt, im Stand festgehalten wird, können erhebliche Fahrwerksverspannungen auftreten, mit der Folge, daß das Fahrzeug beim Lösen der Bremse eine plötzliche Hub- oder Absenkbewegung ausführt. Um dies zu vermeiden, wird in der DE 38 15 859 C2 vorgeschlagen, daß das Regelsystem der Niveauregulierung auf ein Arretierungsanzeigesignal anspricht, welches erzeugt wird, wenn Fahrzeugräder durch die Betriebsbremse des Fahrzeuges unbeweglich gehalten werden. In einem solchen Falle wird die durch die Niveauregulierung ermöglichte Höhenverstellung auf Werte innerhalb eines Bereiches beschränkt, der von dem bei Bremsbetätigung und stehendem Fahrzeug verbleibenden Bewegungsspiel der Räder abhängig ist. Vereinfacht ausgedrückt wird also das Maß einer möglichen Höhenverstellung bei stehendem Fahrzeug und betätigter Betriebsbremse gegenüber dem Maß der möglichen Höhenverstellung bei fahrendem Fahrzeug deutlich beschränkt.

Aus der DE 37 13 640 A1 ist ein Fahrzeug bekannt, bei dem Hydraulikleitungen sowohl für das Betriebsbremssystem als auch eine Niveauregulierung des Fahrzeuges ausgenutzt werden. Durch eine Prioritätsschaltung wird erreicht, daß die Leitungen ausschließlich für das Bremssystem zur Verfügung stehen, wenn der Fahrer das Bremspedal od.dgl. betätigt. Eine Niveauregulierung kann dementsprechend nur bei nicht betätigter Betriebsbremse erfolgen. Das System der DE 37 13 640 A1 bietet somit zwar Möglichkeit, Herstellungsaufwand durch Doppelnutzung von Hydraulikleitungen zu sparen, jedoch ist eine Kompensation von Bremsnickbewegungen u.dgl. des Fahrzeuges nicht möglich.

Aufgabe der Erfindung ist es nun, eine dem jeweiligen Einsatz des Fahrzeuges noch besser anpaßbare Niveauregulierung zu schaffen.

Diese Aufgabe wird erfindungsgemäß dadurch gelöst, daß weitere Signalgeber eine Unterschreitung eines geringen Schwellwertes der Fahrgeschwindigkeit erfassen und die Regelschaltung die Niveauregelung für eine vorgegebene bzw. vorgebbare Verzögerungszeit - z.B. 30 Sekunden - unterbricht bzw. den Zustand des Federungssystems unverändert läßt, wenn ein Bremsbetätigungssignal und ein Signal für Unterschreitung des Schwellwertes vorliegen.

Die Erfindung beruht auf dem allgemeinen Gedanken, das jeweilige Niveau des Fahrzeuges für kürzere Zeit weitestgehend unverändert zu belassen, wenn das Fahrzeug unter Betätigung der Hauptbetriebsbremse angehalten wird bzw. bei betätigter Hauptbetriebsbremse nur noch mit äußerst geringer Geschwindigkeit fährt. Hier wird berücksichtigt, daß die typischerweise auf sämtliche Fahrzeugräder wirkende Hauptbetriebsbremse bei stehendem bzw. nahezu stehendem Fahrzeug die Hubbeweglichkeit der Fahrzeugräder gegenüber dem Fahrzeugaufbau deutlich vermindert, weil derartige Hubbewegungen bei modernen Fahrwerken mit weiteren Radbewegungen verbunden sind, die durch die betätigte Hauptbetriebsbremse erschwert werden. Insbesondere kann sich bei Federungshüben der Radstand ändern, d.h. die Fahrzeugräder führen relativ zueinander bei Federungshüben Bewegungen in Fahrzeuglängsrichtung aus. Derartige Bewegungen sind aber im Stand des Fahrzeuges bei betätigter Hauptbetriebsbremse nur erschwert möglich. Hinzu kommt, daß die Bremsmomente der Fahrzeugräder regelmäßig auf Radführungslenker einwirken, welche bei Federungshüben Schwenkbewegungen um eine Fahrzeugquerachse ausführen. Sollte ein Radführungslenker eine gegenüber seiner Normallage verstellte Lage einnehmen, wenn das Fahrzeug anhält und mit betätigter Hauptbetriebsbremse im Stand gehalten wird, so können die verstellten Radführungslenker nicht ohne weiteres in ihre Normallage zurückschwenken. Vielmehr wird das Fahrwerk bzw. das Federungssystem durch die Hauptbetriebsbremse in einem verspannten Zustand gehalten.

Beim Lösen der Hauptbetriebsbremse kann die Federung wieder in ihren Normalzustand zurückgehen, so daß sich eine beim Bremsen aufgetretene und im Stillstand des Fahrzeuges aufgrund betätigter Hauptbetriebsbremse aufrechterhaltene Niveauänderung automatisch ausgleichen kann, ohne daß es dazu eines niveauregulierenden Eingriffes in das Federungssystem bedarf.

Da erfindungsgemäß bei stehendem Fahrzeug und betätigter Hauptbetriebsbremse im Regelfall keine niveauregulierenden Eingriffe erfolgen, können diese Eingriffe auch nicht zu unerwünschten Niveaueinstellungen führen, wenn nachfolgend die Hauptbetriebsbremse wieder gelöst wird bzw. das Fahrzeug anfährt. Dementsprechend werden auch andernfalls notwendige Niveaukorrekturen beim Anfahren des Fahrzeuges überflüssig.

Gemäß einer besonders bevorzugten Ausführungsform der Erfindung kann die Regelschaltung eingangsseitig mit einem Signalgeber, welcher ein Öffnen einer Fahrzeugtür erfaßt, verbunden sein, um eine Niveauregelung unabhängig vom Betriebszustand der Hauptbetriebsbremse zu ermöglichen, wenn im Stillstand des Fahrzeuges eine Fahrzeugtür geöffnet wird.

Auf diese Weise kann berücksichtigt werden, daß sich der Beladungszustand eines Fahrzeuges typischerweise bei geöffneter Fahrzeugtür verändert und dementsprechend eine Ausregelung von beladungsabhängigen Niveauänderungen wünschenswert ist.

Um die automatisch durchgeführten Niveaukorrekturen mit hoher Wahrscheinlich auf das jeweils notwendige Maß beschränken zu können, kann des weiteren vorgesehen sein, bei stehendem Fahrzeug und betätigter Hauptbetriebsbremse in jedem Falle nur begrenzte Niveaukorrekturen durchzuführen. Damit wird in jedem Falle berücksichtigt, daß bei betätigter Betriebsbremse und stehendem Fahrzeug eine Niveauänderung immer zu einer Veränderung der Verspannung des Fahrwerkes führt und die beim Lösen der Betriebsbremse und damit einhergehenden Abbau der Verspannungen erfolgenden Federungshübe nicht hinreichend genau abschätzbar sind.

Im übrigen wird hinsichtlich bevorzugter Merkmale der Erfindung auf die Ansprüche sowie die nachfolgende Erläuterung der Zeichnung verwiesen, anhand der besonders bevorzugte Varianten der Erfindung beschrieben werden.

Dabei zeigt
- Fig. 1: eine schematisierte Seitenansicht eines Kraftfahrzeuges, dessen Hinterachse eine niveaugeregelte Luftfederung aufweist, in Normallage,
- Fig. 2: eine der Fig. 1 entsprechende Seitenansicht des Fahrzeuges in (übertrieben dargestellter) starker Nickstellung und
- Fig. 3: eine schaltplanartige Darstellung eines zur Niveauregelung einer Luftfederung dienenden erfindungsgemäßen Systems.

Ein als Großraumlimousine ausgebildetes Kraftfahrzeug 1 besitzt seinen Vorderrädern 2 zugeordnete Federbeine 3 herkömmlicher Art mit Schraubendruckfedern. Bei Federungshüben werden die Vorderrräder 2 von den Federbeinen 3 im Zusammenwirken mit nicht dargestellten Radführungsorganen, wie z.B. Längs- und Querlenkern, relativ zum Fahrzeugaufbau auf einer strichliert dargestellten Wegstrecke V geführt, welche im dargestellten Beispiel leicht schräg zur Fahrzeughochachse verläuft.

Auch wenn bei derartigen Großraumlimousinen die jeweilige Beladung sehr unterschiedlich sein kann, wirkt sich dies an den Federbeinen 3 nur geringfügig aus, d.h. der Bodenabstand des Kraftfahrzeuges 1 bleibt im Bereich der Vorderräder 2 unabhängig von der jeweiligen Zuladung weitestgehend gleich.

Den Hinterrädern 4 sind Luftfederbälge 5 zugeordnet, die in weiter unten dargestellter Weise eine Niveauregelung ermöglichen, so daß ein gewünschter Bodenabstand des Fahrzeugaufbaus unabhängig von der jeweiligen Zuladung, deren Veränderung zu erheblichen Belastungsänderungen der Luftfederbälge 5 führen kann, einstellbar ist.

Die Hinterräder 4 werden unter anderem durch Schräg- bzw. Längslenker 6 geführt, die bei Federungshüben um ihre aufbauseitigen Lager schwenken und die Hinterräder 4 relativ zum Aufbau auf Bogenbahnen H führen.

Das Fahrzeug 1 besitzt in üblicher Weise eine Betriebsbremse, die sowohl auf die Vorderräder 2 als auch die Hinterräder 4 wirkt. Von dieser Betriebsbremse ist lediglich ein zu ihrer Betätigung dienendes Pedal 7 angedeutet. Die Bremsmomente der Radbremsen werden in üblicher Weise an den Vorderrädern 2 über die Federbeine 3 und an den Hinterrädern 4 über die Längslenker 6 auf den Fahrzeugaufbau abgetragen.

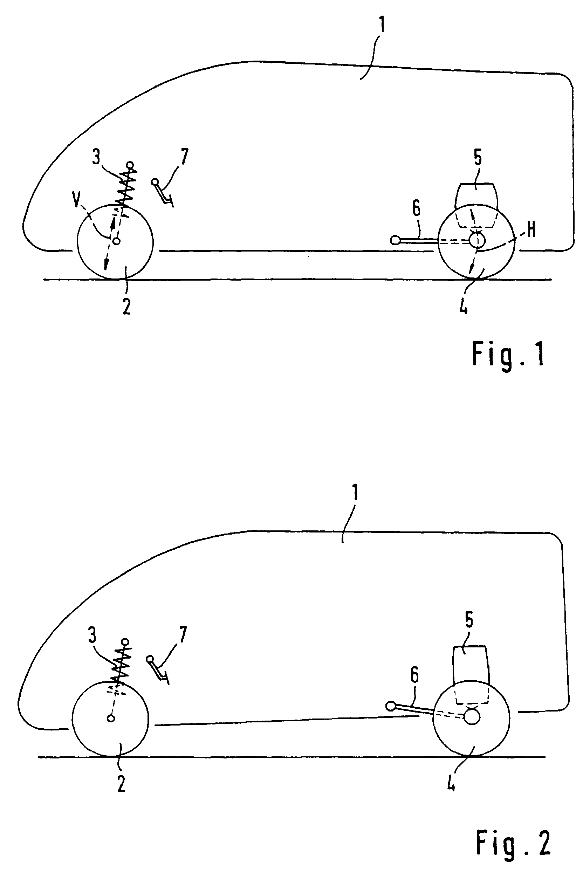

Wird das Fahrzeug 1 während der Fahrt abgebremst, so wirken auf den Fahrzeugaufbau Nickmomente, d.h. der Fahrzeugaufbau sucht relativ zur Fahrbahn eine Schwenkbewegung um eine Fahrzeugguerachse auszuführen. Dies führt bei Vorwärtsfahrt dazu, daß der Fahrzeugbug relativ zur Fahrbahn gegenüber seiner Normallage etwas abgesenkt und das Fahrzeugheck etwas angehoben wird, wie es in Fig. 2 (übertrieben) dargestellt ist.

Nun möge das Fahrzeug 1 die in Fig. 2 dargestellte Lage auch noch bei Erreichen des Stillstandes aufweisen, darüber hinaus möge die Betriebsbremse mit größerer Kraft und entsprechend großer Bremswirkung betätigt bleiben. Dies hat zur Folge, daß die in Fig. 2 dargestellte Nicklage des Fahrzeuges 1 nicht ohne weiteres abgebaut werden kann. Dies gilt insbesondere für die erhöhte Lage des Fahrzeughecks. Aufgrund der betätigten Betriebsbremse werden die Hinterräder 4 relativ zu den Längslenkern 6 praktisch drehfest gehalten, mit der Folge, daß die Längslenker 6 aus ihrer in Fig. 2 dargestellten Lage nur unter Drehung der Hinterräder 4 relativ zum Untergrund in die Lage der Fig. 1 zurückschwenken können. Die genannte Drehung der Hinterräder sucht jedoch das Kraftfahrzeug 1 in Vorwärtsrichtung zu bewegen. Eine solche Bewegung des Kraftfahrzeuges 1 wird durch die gebremsten Vorderräder 2 behindert.

Ähnliche Verhältnisse liegen vor, wenn das Fahrzeugheck bei stehendem Fahrzeug eine übermäßig abgesenkte Lage aufweisen und die Betriebsbremse betätigt sein sollte. In diesem Falle suchen die aufgrund der betätigten Betriebsbremse relativ zu den Längslenkern 6 im wesentlichen drehfesten Hinterräder 4 das Fahrzeug in Rückwärtsrichtung zu bewegen, wenn das Fahrzeug durch starke Luftzufuhr zu den Luftfederbälgen 5 angehoben wird und die Längslenker 6 dabei in Fig. 1 mit den von der Bremse relativ zu den Längslenkern 6 nahezu drehfest gehaltenen Hinterrädern 4 im Uhrzeigersinn schwenken.

Wird die Betriebsbremse gelöst, können Federungshübe der Vorderräder 2 sowie der Hinterräder 4 wieder zwangsfrei erfolgen, so daß der Bodenabstand des Fahrzeuges 1 nur noch von seiner Beladung und den jeweiligen Federkräften an den Federbeinen 3 bzw. an den Luftfederbälgen 5 abhängt. Soweit also das Fahrzeug 1 vor Betätigung der Bremse ein gewünschtes Niveau aufgewiesen hat und vor Lösen der Betriebsbremse keinerlei Be- bzw. Entlüftung der Luftfederbälge 5 erfolgt ist, wird sich nach dem Lösen der Betriebsbremse das vorherige Normalniveau wieder einstellen, vorausgesetzt, daß sich der Beladungszustand des Fahrzeuges in der Zwischenzeit nicht geändert hat.

Wenn andererseits durch starke Be- bzw. Entlüftung der Luftfederbälge 5 bei stehendem Fahrzeug und betätigter Betriebsbremse eine anfänglich bestehende Abweichung von einem Sollniveau ausgeglichen würde, wird sich beim nachfolgenden Lösen der Betriebsbremse zunächst ein vom Sollniveau abweichendes Niveau einstellen, so daß erneut niveauregelnde Maßnahmen durchgeführt werden müssen.

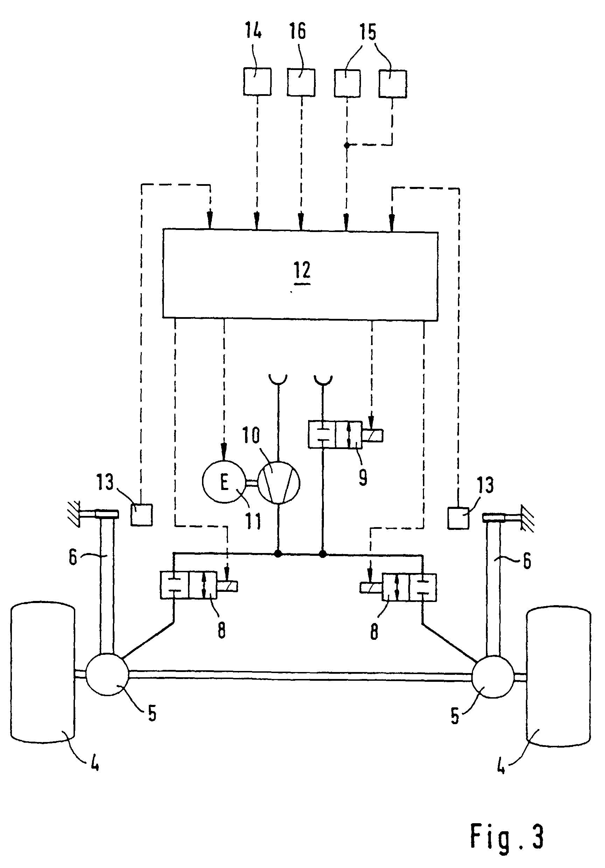

Bei der nachfolgend anhand der Fig. 3 erläuterten erfindungsgemäßen Niveauregelung werden die vorangehend beschriebenen Effekte berücksichtigt, um unnötige niveausteuernde Maßnahmen sowie den damit verbundenen Energieverbrauch zu vermeiden.

Gemäß Fig. 3 können die Luftfederbälge 5 der Hinterräder 4 über Absperrventile 8 und 9 zur Belüftung mit der Druckseite eines Kompressors 10 bzw. zur Entlüftung mit der Atmosphäre verbunden werden. Der Kompressor 10 wird von einem Elektromotor 11 angetrieben, welcher zu seiner Steuerung (insbesondere Ein- und Ausschaltung) mit der Ausgangsseite einer rechnergestützten Regelschaltung 12 verbunden ist. Eingangsseitig ist die Regelschaltung 12 mit Hubsensoren 13 verbunden, deren Signale mit dem Bodenabstand des Fahrzeugbaus korreliert sind. Im dargestellten Beispiel wirken die Hubsensoren 13 mit den Längslenkern 6 zusammen und erfassen deren Schwenkstellung relativ zu einer die Fahrzeuglängsachse und Fahrzeugquerachse enthaltenden Ebene. Die Hubsensoren 13 erfassen also beispielsweise den Drehhub der Längslenker 6 relativ zum Fahrzeugaufbau.

Des weiteren ist die Regelschaltung 12 eingangsseitig mit einem Sensor 14 gekoppelt, dessen Signale wiedergeben, ob die Betriebsbremse des Fahrzeuges bzw. das zur Betätigung der Betriebsbremse dienende Pedal 7 betätigt werden oder nicht. Da bei Kraftfahrzeugen eine Betätigung der Betriebsbremse durch aufleuchtende Bremslichter angezeigt werden muß, kann der Sensor 14 durch einen ohnehin im Fahrzeug vorhandenen Bremslichtschalter gebildet und ein entsprechender Eingang der Regelschaltung 12 parallel zum Bremslicht mit dem Bremslichtschalter elektrisch verbunden sein. Damit kann die das Bremslicht beaufschlagende elektrische Spannung (bzw. bei nicht betätigter Bremse die dann nicht vorhandene elektrische Spannung) als Signal für die Bremsbetätigung verwendet werden.

Ein weiterer Eingang der Regelschaltung 12 ist mit Sensoren 15 verbunden, die registrieren, ob eine der Fahrzeugtüren bzw. eine Heckklappe geöffnet ist oder nicht. In der Regel sind bei heutigen Fahrzeugen die Fahrzeugtüren bzw. die Hackklappe mit Türschaltern kombiniert, welche bei geöffneter Tür bzw. Heckklappe die Innenbeleuchtung des Fahrzeuges einschalten. Diese Türschalter können gegebenenfalls in gleicher Weise wie der Bremslichtschalter als Sensor eingesetzt werden.

Schließlich ist die Regelschaltung 12 eingangsseitig mit einem Tachometer 16 oder einem sonstigen Meßorgan verbunden, dessen Signale erkennen lassen, ob die Fahrgeschwindigkeit des Fahrzeuges ober- oder unterhalb eines sehr geringen Wertes liegt, welcher einem völligen Stillstand des Fahrzeuges nahe kommt.

Mittels des Tachometers 16 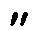 erkennt" also die Regelschaltung 12, ob das Fahrzeug fährt oder (nahezu bzw. bewegungslos) steht. Solange ein Fahrzustand erkannt wird, werden die Ventile 8 und 9 sowie der Elektromotor 11 des Kompressors 10 in einer für Fahrbetrieb vorgesehenen Weise betätigt, wobei nach Einstellung eines Sollniveaus im wesentlichen nur eventuelle Leckagen an den Luftfederbälgen 5 bzw. an den Ventilen 8 und 9 ausgeglichen zu werden brauchen. Darüber hinaus können gegebenenfalls auch dynamische Störkräfte, die auf das Fahrzeug 1 einwirken, ausgeregelt werden.

Sobald die Regelschaltung 12 aufgrund der Signale des Sensors 14 und des Tachometers 16 feststellt, daß das Fahrzeug 1 bei betätigter Betriebsbremse stillsteht, bzw. nahezu den Zustand eines Stillstandes erreicht hat, bleiben die Absperrventile 8 für eine vorgebbare Verzögerungszeit von beispielsweise 30 Sekunden geschlossen. Darüber hinaus bleibt auch der Elektromotor 11 und damit der Kompressor 10 während dieser Verzögerungszeit ausgeschaltet. Dies ist gleichbedeutend damit, daß zunächst keinerlei niveauregelnde Maßnahmen erfolgen.

Sollte während der Verzögerungzeit eine Fahrzeugtür geöffnet werden und dementsprechend von einem der Sensoren 15 ein Türöffnungssignal erzeugt werden, ist dies für die Regelschaltung 12 ein 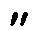 Hinweis", daß höchst wahrscheinlich eine Änderung der Zuladung, beispielsweise durch Zu- bzw. Ausstieg von Fahrgästen bei einem Taxi, erfolgt.Damit 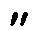 darf" die Regelschaltung 12 nunmehr unabhängig davon, ob die Verzögerungszeit abgelaufen ist oder nicht, niveauregelnde Maßnahmen einleiten, d.h. die Ventile 8 und 9 zur Entlüftung eines der Luftfederbälge 5 oder beider Luftfederbälge 5 öffnen bzw. zur Belüftung der Luftfederbälge 5 oder eines zu der Luftfederbälge 5 das Ventil 9 schließen und den Elektromotor 11 bei zumindest einem geöffneten Ventil 8 einschalten.

Allerdings erfolgen derartige niveauregelnde Maßnahmen bei vollständig oder nahezu stillstehendem Fahrzeug 1 und betätigter Betriebsbremse nur dann, wenn eine größere Soll-Istwert-Abweichung des Fahrzeugniveaus vorliegt.

Darüber hinaus kann vorgesehen sein, daß bei diesem Betriebszustand des Fahrzeuges lediglich eine begrenzte Niveaukorrektur möglich ist, etwa derart, daß die Luftfederbälge 5 nur für eine begrenzte Zeitspanne von z.B. 12 Sekunden be- bzw. entlüftet werden können. Weitergehende Niveaukorrekturen erfolgen erst beim Fahrbetrieb oder bei Betätigung eines gesonderten Befehlsgebers (nicht dargestellt) durch den Fahrer.

Ähnliches ist unabhängig vom Öffnungs- bzw. Schließzustand der Fahrzeugtüren vorgesehen, wenn bei vollständig oder nahezu stillstehendem Fahrzeug und betätigter Betriebsbremse die Verzögerungszeit abgelaufen ist. Auch in diesem Falle werden Niveaukorrekturen nur in begrenztem Umfange und/oder nur bei größeren Soll-Istwert-Abweichungen des Fahrzeugniveaus erfolgen.

Sobald die Betriebsbremse gelöst wird, wird eine Soll-Istwert-Abweichung des Fahrzeugniveaus unabhängig von der Fahrgeschwindigkeit ausgeregelt, zumindest dann, wenn das Fahrzeug nicht unter Betätigung einer Wegfahrsperre stillgesetzt wird.

## Patentansprüche

1. Fahrzeug mit niveaugeregeltem Federungssystem, insbesondere mit niveaugeregelter Luftfederung, wobei die Niveauregulierung unabhängig von einer Betätigung einer Betriebsbremse des Fahrzeuges zu arbeiten vermag und eine dem Federungssystem zur Niveauregelung zugeordnete, eingangsseitig mit Sensoren (13) zur Niveauerfassung verbundene Regelschaltung (12) mit Signalgebern (14) verbunden ist, welche eine Betätigung einer Hauptbetriebsbremse des Fahrzeuges erfassen,
**dadurch gekennzeichnet,**
daß weitere Signalgeber (16) eine Unterschreitung eines geringen Schwellwertes der Fahrgeschwindigkeit erfassen und die Regelschaltung (12) die Niveauregelung für eine vorgegebene bzw. vorgebbare Verzögerungszeit - z.B. 30 Sekunden - unterbricht bzw. den Zustand des Federungssystems unverändert läßt, wenn ein Bremsbetätigungssignal und ein Signal für Unterschreitung des geringen Schwellwertes der Fahrgeschwindigkeit vorliegen.

2. Fahrzeug nach Anspruch 1,
**dadurch gekennzeichnet,**
daß die Regelschaltung (12) eingangsseitig mit einem Signalgeber (15), welcher ein Öffnen einer Fahrzeugtür erfaßt, verbunden ist und auch bei Unterschreitung des Schwellwertes der Fahrgeschwindigkeit sowie betätigter Betriebsbremse eine Niveauregelung durchführt, wenn ein Signal für eine geöffnete Tür vorliegt.

3. Fahrzeug nach einem der Ansprüche 1 oder 2,
**dadurch gekennzeichnet,**
daß bei betätigter Betriebsbremse und Unterschreitung des Schwellwertes der Fahrgeschwindigkeit nur eine begrenzte Niveaukorrektur ausführbar ist.

4. Fahrzeug nach Anspruch 3,
**dadurch gekennzeichnet,**
daß Luftfederaggregate (5) nur für eine begrenzte Zeitspanne für eine Niveaukorrektur be- bzw. entlüftet werden.

5. Fahrzeug nach einem der Ansprüche 1 und 2,
**dadurch gekennzeichnet,**
daß die Regelschaltung (12) eingangsseitig mit einem Signalgeber (15) verbunden ist, welcher ein Öffnen einer Fahrzeugtür erfaßt und Luftfederaggregate (5) während der Verzögerungszeit - bei nicht vorhandenem Signal für geöffnete Tür - abgesperrt hält.

6. Fahrzeug nach einem der Ansprüche 1 bis 5,
**dadurch gekennzeichnet,**
daß bei Unterschreibung des Schwellwertes der Fahrgeschwindigkeit sowie betätigter Betriebsbremse eine aktive Niveauregelung nur bei größerer Soll-Istwert-Abweichung des Niveaus erfolgt.

## Claims

1. A vehicle with a level-adjusted suspension system, in particular having level-adjusted air spring suspension, whereby the level control system is able to operate independently of operation of a service brake of the vehicle, and a control circuit (12) assigned to the suspension system for the purpose of level adjustment and connected to sensors (13) on the input side for detecting level is connected to signal emitters (14) which detect operation of a main service brake of the vehicle,
**characterised in that**
other signal emitters (16) detect when the travel speed falls below a low threshold value and the control circuit (12) interrupts the level control for a predetermined or predeterminable delay time - e.g. 30 seconds - leaving the state of the suspension system unchanged if a brake operation signal and a signal indicating a fall below the low threshold value of the travel speed are present.

2. A vehicle as claimed in claim 1,
**characterised in that**
the control circuit (12) is connected on the input side to a signal emitter (15) which detects when a vehicle door is opened and applies a level adjustment even if the travel speed falls below the threshold and the service brake is operated if a signal indicating an opened door is present.

3. A vehicle as claimed in one of claims 1 or 2,
**characterised in that**
when the service brake is operated and the travel speed falls below the threshold value, only a limited degree of correction can be applied.

4. A vehicle as claimed in claim 3,
**characterised in that**
air spring units (5) are pressurised or depressurised for a limit period only to apply a level correction.

5. A vehicle as claimed in one of claims 1 and 2,
**characterised in that**
the control circuit (12) is connected on the input side to a signal emitter (15) which detects when a vehicle door is opened and keeps the air spring units (5) closed during the delay time - if no signal is present indicating that a door has been opened.

6. A vehicle as claimed in one of claims 1 to 5,
**characterised in that**
if the vehicle travel speed falls below the threshold value and the service brake is operated, an active level correction is applied only if there is greater deviance in the desired-actual value of the level.

## Revendications

1. Véhicule comportant un système de suspension à régulation de niveau, notamment une suspension pneumatique à régulation de niveau, dans lequel la régulation du niveau peut fonctionner indépendamment d'un actionnement d'un frein de service du véhicule, et un circuit de régulation (12), qui est associé au système de suspension pour la régulation du niveau et est relié, côté entrée, à des capteurs (13) de détection de niveau, est relié à des transmetteurs de signaux (14), qui détectent un actionnement d'un frein de service principal du véhicule,
caractérisé en ce
que d'autres transmetteurs de signaux (16) détectent le dépassement, par valeurs inférieures, d'une faible valeur de seuil de la vitesse de déplacement et que le circuit de régulation (12) interrompt la régulation du niveau pour un temps de retard prédéterminé ou pouvant être prédéterminé - par exemple 30 secondes - ou laisse inchangé l'état du système de suspension lorsqu'un signal d'actionnement des freins et un signal de dépassement, par valeurs inférieures, de la faible valeur de seuil de la vitesse de déplacement sont présents.

2. Véhicule selon la revendication 1, caractérisé en ce
que le circuit de régulation (12) est relié, côté entrée, à un transmetteur de signaux (15), qui détecte une ouverture d'une portière du véhicule, et que, également dans le cas d'un dépassement, par valeurs inférieures, de la valeur de seuil de la vitesse de déplacement et dans le cas où le frein de service est actionné, une régulation du niveau est exécutée lorsqu'un signal indiquant une portière ouverte est présent.

3. Véhicule selon la revendication 1 ou 2,
caractérisé en ce
que lorsque le frein de service est actionné et qu'il se produit un dépassement, par valeurs inférieures, de la valeur de seuil de la vitesse de déplacement, seule une correction limitée du niveau peut être exécutée.

4. Véhicule selon la revendication 3, caractérisé en ce
que des modules (5) de ressorts pneumatiques sont aérés ou désaérés uniquement pendant un intervalle de temps limité pour une correction du niveau.

5. Véhicule selon l'une des revendications 1 et 2, caractérisé en ce
que le circuit de régulation (12) est relié, côté entrée, à un transmetteur de signaux (15), qui détecte une ouverture d'une portière du véhicule et maintient bloqués les modules (5) à ressorts pneumatiques pendant la durée de retard - dans le cas où aucun signal de portière ouverte n'est présent.

6. Véhicule selon l'une des revendications 1 à 5, caractérisé en ce
que dans le cas du dépassement, par valeurs inférieures, de la valeur de seuil de la vitesse de déplacement et dans le cas où un frein de service est actionné, une régulation active du niveau s'effectue uniquement dans le cas d'un écart assez important entre la valeur de consigne et la valeur réelle du niveau.
